# EUROPÄISCHE PATENTSCHRIFT

(11) **EP 4 264 317 B1**
(45) Veröffentlichungstag und Bekanntmachung des Hinweises auf die Patenterteilung: **22.07.2026**
(21) Anmeldenummer: 21809979.4
(22) Anmeldetag: 08.11.2021
(51) Int. Cl.: G01S 7/481, G01S 7/497, G01S 17/42, G01S 17/89, G01C 15/00, G01C 7/00, G01S 7/00, G01S 17/36

(54) **VERFAHREN ZUM ERMITTELN EINES PROFILSCHNITTS, 2D-LASERSCANNER SOWIE SYSTEM**
METHOD FOR DETERMINING A PROFILE SECTION, 2D LASER SCANNER, AND SYSTEM
PROCÉDÉ DE DÉTERMINATION D'UNE SECTION DE PROFIL, SCANNER LASER 2D ET SYSTÈME

(30) Priorität: 17.12.2020 DE 102020216159
(43) Veröffentlichungstag der Anmeldung: 25.10.2023
(73) Patentinhaber: Robert Bosch GmbH, 70442 Stuttgart (DE)
(72) Erfinder: CHAN, Chi Fung, Hong Kong (CN); MARQUARDT, Daniel, 73765 Neuhausen Auf Den Fildern (DE); BARTELMESS, Aglaia, 70569 Stuttgart (DE); CHEUNG, Philip, Hong Kong (CN); KWAN, Eddie, Hong Kong (CN)
(86) Internationale Anmeldenummer: PCT/EP2021/080942
(87) Internationale Veröffentlichungsnummer: WO 2022/128256

(56) Entgegenhaltungen:
- DE-A1- 102009 040 468

## Beschreibung

Die Erfindung betrifft ein Verfahren zum Ermitteln eines Profilschnitts eines Objektes und/oder Raumes mittels eines 2D-Laserscanners mit einer Laserentfernungsmessvorrichtung. Ferner betrifft die Erfindung einen 2D-Laserscanner.

### Stand der Technik

Aus DE 10 2009 027 668 A1 ist ein Laserentfernungsmessgerät bekannt, bei dem der Laserstrahl mittels eines Spiegels innerhalb einer Messebene rotiert werden kann, um mehrere winkelabhängige Entfernungen innerhalb der Messebene zu messen. Diese Abstände werden zwischen der einen Laserstrahl emittierenden Laserdiode im Laserentfernungsmessgerät und den umgebenden Wänden gemessen.

Aus der DE 10 2009 040 468 A1 ist eine tragbare mobile Erfassungseinrichtung zur dreidimensionalen geometrischen Erfassung einer Umgebung bekannt.

### Offenbarung der Erfindung

Die Erfindung geht aus von einem Verfahren zum Ermitteln eines Profilschnitts eines Objektes und/oder Raumes mittels eines 2D-Laserscanners mit einer Laserentfernungsmessvorrichtung und einem 2D-Laserscanner. Der 2D-Laserscanner umfasst zumindest eine Laserentfernungsmessvorrichtung, wobei der 2D-Laserscanner dazu eingerichtet ist, einander zuordenbare, insbesondere zugeordnete, Entfernungsmesswerte und Entfernungsmessrichtungen mittels der Laserentfernungsmessvorrichtung in einer von einem Laserstrahl der Laserentfernungsmessvorrichtung zumindest teilweise radial überstrichenen Messebene zu erfassen. Der 2D-Laserscanner dient zur Vermessung von Objekten und/oder Räumen unter Erzeugung eines, insbesondere zweidimensionalen, Profilschnitts des Objektes bzw. Raumes. Derartige 2D-Laserscanner werden von Architekten, Raum- oder Gebäudeplanern, Immobilienmaklern oder Handwerkern verwendet, um die Form und/oder Größe von Räumen und/oder Objekten (wie beispielsweise Schwimmbädern) zu bestimmen. Der 2D-Laserscanner findet insbesondere Anwendung im Rahmen von Vermessungsaufgaben, wie sie insbesondere im handwerklichen Bereich auftreten. Beispielsweise findet der 2D-Laserscanner Anwendung bei einem Innenausbau von Gebäuden oder allgemein bei Bauarbeiten.

Der 2D-Laserscanner umfasst eine Laserentfernungsmessvorrichtung zur berührungslosen Entfernungsmessung. Die Laserentfernungsmessvorrichtung umfasst ferner zumindest eine Laserlichtquelle, insbesondere eine Laserdiode, zur Erzeugung von Laserstrahlung. Die Laserentfernungsmessvorrichtung ist dazu vorgesehen, zeitlich modulierte Laserstrahlung in Form eines Laserstrahls in Entfernungsmessrichtung auf ein Zielobjekt hin, dessen Entfernung zu der Laserentfernungsmessvorrichtung ermittelt werden soll, auszusenden. Eine von dem Zielobjekt reflektierte oder gestreute, d.h. zurückgestrahlte, Laserstrahlung wird von der Laserentfernungsmessvorrichtung, insbesondere von einer Empfangseinrichtung der Laserentfernungsmessvorrichtung, zumindest teilweise detektiert und zur Ermittlung des zu messenden Entfernungsmesswertes in Entfernungsmessrichtung verwendet. Die Empfangseinrichtung ist dabei zum Detektieren von zurückgestrahlter Laserstrahlung ausgebildet. Aus der ausgesendeten Laserstrahlung und der von der Oberfläche des Zielobjekts reflektierten Laserstrahlung wird mittels Phasenvergleich eine Lichtlaufzeit ermittelt und über die Lichtgeschwindigkeit der gesuchte Entfernungsmesswert zwischen der Laserentfernungsmessvorrichtung, d.h. dem 2D-Laserscanner, und dem Zielobjekt bestimmt. Alternativ kann die Lichtlaufzeit auch aus einer Flugzeitbestimmung ermittelt werden. Die zu Grunde liegenden Konzepte der berührungslosen Entfernungsmessung per Laser sind einem Fachmann bekannt. Die Begriffe "Laserstrahlung" und "Laserstrahl" werden hier synonym verwendet. Unter "zumindest teilweise überstreichen" ist zu verstehen, dass auch nur Ausschnitte der Ebene (beispielsweise über einen Winkelbereich von 180°) überstrichen werden und/oder dass der emittierte Laserstrahl temporär unterbrochen ist, während er sich in der Messebene von einer Entfernungsmessrichtung (Messposition) zur nächsten Entfernungsmessrichtung (Messposition) bewegt.

Der 2D-Laserscanner ist dazu eingerichtet, den mittels der Laserentfernungsmessvorrichtung emittierten Laserstrahl in unterschiedliche Raumrichtungen auszurichten, sodass Entfernungsmesswerte in unterschiedlichen Raumrichtungen, d.h. Entfernungsmessrichtungen, erhalten werden. Der 2D-Laserscanner ist speziell dazu eingerichtet, den Laserstrahl der Laserentfernungsmessvorrichtung zumindest teilweise in radialer Richtung - ausgehend von der Laserentfernungsmessvorrichtung im Zentrum - eine Messebene überstreichen zu lassen. Dies ist beispielsweise realisierbar, indem die Laserentfernungsmessvorrichtung um eine senkrecht zur Emissionsrichtung des Laserstrahls orientierte Rotationsachse gedreht wird. Dabei kann der Nullpunkt der Entfernungsmessung vorteilhaft auf der Rotationsachse - und somit im Zentrum der Drehbewegung - liegen. Alternativ ist denkbar, strahllenkende optische Elemente wie beispielsweise diffraktive Elemente, Spiegel, Reflektoren oder dergleichen zu verwenden, um auf technisch einfache Weise eine Aussendung des Laserstrahls in unterschiedliche Raumrichtungen zu ermöglichen, wobei der Laserstrahl der Laserentfernungsmessvorrichtung ebenfalls zumindest teilweise in radialer Richtung - ausgehend von dem optischen Element im Zentrum - eine Messebene überstreicht. Insbesondere kann der 2D-Laserscanner eine Antriebsvorrichtung zum Ausrichten, insbesondere Drehen um die Rotationsachse, der Laserentfernungsmessvorrichtung oder des strahllenkenden optischen Elements umfassen. Die Antriebsvorrichtung kann beispielsweise über einen elektrischen Motor gesehen oder alternativ unter Verwendung einer aufziehbaren Feder wie bei einer Eieruhr, die derart vorgespannt wird und sich anschließend definiert wieder entspannt. Durch die Antriebsvorrichtung wird ein besonders einfaches, automatisiertes Erfassen der Entfernungsmesswerte in unterschiedlichen Entfernungsmessrichtungen realisiert. Die Entfernungsmessrichtung im dreidimensionalen Raum, insbesondere in der von dem Laserstrahl überstrichenen Messebene, in die der Laserstrahl auf das Zielobjekt hin ausgesendet wird, wird während der Durchführung einer jeweiligen Entfernungsmessung mittels eines Sensors oder über eine Steuervorrichtung, beispielsweise der Antriebsvorrichtung, erfasst. In diesem Sinne wird auch die Entfernungsmessrichtung mittels oder unter Verwendung der Laserentfernungsmessvorrichtung erfasst, da eine gegebene Ausrichtung der Laserentfernungsmessvorrichtung die in diesem Zeitpunkt gegenwärtige Entfernungsmessvorrichtung definiert. Die Erfassung der Entfernungsmessrichtung kann beispielsweise über die Erfassung eines Entfernungsmesswinkels, beispielsweise eines Drehwinkels der Laserentfernungsmessvorrichtung bezüglich der oben genannten Rotationsachse, realisiert sein. Derart ist, bezogen auf den 2D-Laserscanner, die Entfernungsmessrichtung durch den Entfernungsmesswinkel definiert. Durch Ausrichten des Laserstrahls, insbesondere in Folge eines Ausrichtens der Laserentfernungsmessvorrichtung, ist es möglich, Entfernungsmessungen in unterschiedliche Entfernungsmessrichtungen, d.h. unterschiedliche Raumrichtungen, durchzuführen, ohne den 2D-Laserscanner selbst in seiner Lage verändern zu müssen. Derart wird das Vermessen des Objektes und/oder Raumes und das Erstellen des Profilschnitts entsprechend gegenüber der Durchführung einer Vielzahl von Einzelmessungen beschleunigt, da der 2D-Laserscanner nur einmal (insbesondere möglichst zentrisch im Raum) positioniert werden muss und anschließend ohne Lageveränderungen unterschiedliche Entfernungsmessungen durchgeführt werden.

Auf diese Weise werden einander zuordenbaren oder zugeordnete Entfernungsmesswerte und Entfernungsmessrichtungen, insbesondere Entfernungsmesswinkel, mittels der Laserentfernungsmessvorrichtung in einer von dem Laserstrahl der Laserentfernungsmessvorrichtung zumindest teilweise radial überstrichenen Messebene während der Durchführung eines 2D-Laserscans ermittelt. Unter "einander zuordenbar/zugeordnet" ist dabei zu verstehen, dass mittels des 2D-Laserscanners zu jedem erfassten Entfernungsmesswert eine zugehörige Entfernungsmessrichtung, insbesondere ein zugeordneter Entfernungsmesswinkel, erfasst und verarbeitet, insbesondere zumindest temporär gespeichert, wird. Die erfassten Entfernungsmesswerte und Entfernungsmessrichtungen stellen zunächst in abstrakter Form einer 2D-Punktwolke einen Profilschnitt dar. Unter dem Profilschnitt ist dabei zu verstehen, dass der Datensatz einander zugeordnete Entfernungsmesswerte und Entfernungsmessrichtungen umfasst, die innerhalb einer von dem Laserstrahl der Laserentfernungsmessvorrichtung während eines 2D-Laserscans zumindest teilweise radial überstrichenen Messebene liegen, sodass eine Art Raumschnitt - der Profilschnitt als imaginärer Schnitt des Raumes mit der Messebene - erhalten wird. Der Profilschnitt kann anschließend beispielsweise mittels einer Recheneinheit, insbesondere einer Auswerteeinheit, weiterverarbeitet und/oder unter Verwendung einer (geräteinternen oder geräteexternen) Ausgabevorrichtung wie einem Bildschirm an einen Benutzer des 2D-Laserscanners ausgegeben werden. Ferner sind unterschiedliche Auswertungen wie beispielsweise Flächenberechnungen, Winkelberechnungen, Erstellung von Grundrissen etc. anhand des Profilschnitts denkbar. Unterschiedliche Arten der Auswertung von derartigen Profilschnitten sind dem Fachmann bekannt.

Bei der Vermessung typischer Räume sind die meisten Flächen, zu denen die Laserentfernungsmesswerte gemessen werden, vertikale Wände oder horizontale Decken und Fußböden. Im Folgenden wird (ohne Beschränkung der Allgemeinheit) zur Vereinfachung lediglich der Fall einer Vermessung vertikaler Wände - d.h. die Messebene des 2D-Laserscanners ist nahezu horizontal ausgerichtet - diskutiert. Es sei angemerkt, dass die Übertragung auf eine Vermessung mit nahezu vertikal ausgerichteter Messebene ebenfalls problemlos möglich ist. Ein Profilschnitt, der aus der Vermessung vertikaler Wände entsteht, soll im besten Fall Entfernungsmesswerte und Entfernungsmessrichtungen umfassen, die in einer (idealen) horizontalen Ebene liegen. Die horizontale Ebene ist in diesem Fall die Referenzebene. Ist dies nicht der Fall - d.h. die Messebene weist einen Neigungswinkel bezüglich der horizontalen Ebene auf -, entsteht ein verzerrter Profilschnitt, der sich nicht gut für eine weitere Auswertung eignet. Das erfindungsgemäße Verfahren ermöglicht, einen zunächst unter einem Neigungswinkel der Messebene zur horizontalen Ebene (oder allgemein zu einer Referenzebene) erfassten Profilschnitt im Nachgang zum 2D-Laserscan durch mathematische Projektion der erfassten Entfernungsmesswerte und Entfernungsmessrichtungen auf die (ideale) horizontale Ebene (bzw. Referenzebene) zu korrigieren. Das Korrigieren bezeichnet dabei die Umrechnung der erfassten Entfernungsmesswerte mittels trigonometrischer Funktionen und unter Verwendung des Neigungswinkels, wobei in die (ideale) horizontale Ebene (allgemein: Referenzebene) projizierte Entfernungsmesswerte erhalten werden.

In einer Ausführungsform des 2D-Laserscanners weist dieser eine Recheneinheit auf, die dazu eingerichtet, das erfindungsgemäße Verfahren zum Ermitteln eines Profilschnitts auszuführen. Unter der Recheneinheit ist insbesondere eine Computervorrichtung, insbesondere eine Prozessorvorrichtung, zu verstehen.

In einem weiteren Aspekt der Erfindung wird ein System aus einem 2D-Laserscanner und einer extern zum 2D-Laserscanner realisierten Recheneinheit vorgeschlagen. Der 2D-Laserscanner ist dazu eingerichtet, einander zuordenbare oder zugeordnete Entfernungsmesswerte und Entfernungsmessrichtungen, insbesondere Entfernungsmesswinkel, mittels der Laserentfernungsmessvorrichtung in einer von einem Laserstrahl der Laserentfernungsmessvorrichtung zumindest teilweise radial überstrichenen Messebene zu erfassen. Die Recheneinheit, beispielsweise in Form eines Smart Devices wie einem Tablet, einem Smart Phone oder dergleichen, ist zur Durchführung des erfindungsgemäßen Verfahrens zum Ermitteln eines Profilschnitts eingerichtet. In dieser Ausführungsform wird die Durchführung der Korrektur gemäß erfindungsgemäßem Verfahren auf einer zum 2D-Laserscanner externen Recheneinheit durchgeführt, wobei der dazu benötigte Profilschnitt und etwaige weitere Informationen (beispielsweise der Neigungswinkel oder Daten zu dessen Ermittlung) der externen Recheneinheit unter Verwendung einer Datenkommunikationsschnittstelle des 2D-Laserscanners bereitgestellt werden, insbesondere übermittelt werden. Unter einer Datenkommunikationsschnittstelle ist beispielsweise eine Bluetooth-, eine Bluetooth-Low-Energy-, eine WiFi-Datenkommunikationsschnittstelle oder dergleichen zu verstehen. Unter einer externen Recheneinheit ist beispielsweise ein Smartphone, eine Cloud, ein Computer, ein Tablet oder dergleichen zu verstehen.

Das erfindungsgemäße Verfahren zum Ermitteln eines Profilschnitts eines Objektes und/oder Raumes geht aus von einem Verfahren umfassend die Verfahrensschritte:
- Erfassen von einander zuordenbaren oder zugeordneten Entfernungsmesswerten und Entfernungsmessrichtungen mittels der Laserentfernungsmessvorrichtung in einer von einem Laserstrahl der Laserentfernungsmessvorrichtung zumindest teilweise radial überstrichenen Messebene;
- Ermitteln des Profilschnitts aus den Entfernungsmesswerten und Entfernungsmessrichtungen;
- Ermitteln eines Neigungswinkels der Messebene gegenüber einer Referenzebene, insbesondere einer horizontalen oder einer vertikalen Ebene;
- Korrigieren des Profilschnitts unter Verwendung des Neigungswinkels der Messebene.

Das Korrigieren des Profilschnitts erfordert die Kenntnis des Neigungswinkels der Messebene bezüglich der Referenzebene. Erfindungsgemäß wird der Neigungswinkel der Messebene unter Verwendung der Laserentfernungsmessvorrichtung ermittelt. Die Referenzebene stellt dabei eine horizontale oder vertikale Ebene dar, je nachdem, in welcher Richtung die Messebene ausgerichtet ist.

Bei aus dem Stand der Technik bekannten Verfahren, beispielsweise aus US 8,699,005 B2, ist bekannt, den Neigungswinkel mit einem Beschleunigungssensor oder einem Trägheitssensor zu ermitteln, der die Ausrichtung der Laserentfernungsmessvorrichtung und somit der Messebene erfasst. Dies erfordert die Integration zusätzlicher, besonders präzise arbeitender und folglich teurer Sensoren im 2D-Laserscanner. Das vorgeschlagene Verfahren erlaubt es, auf zusätzliche Sensoren zu verzichten und dennoch auf einfache Weise einen Neigungswinkel zu erfassen, mittels dem der erfasste Profilschnitt korrigiert werden kann.

In einer Ausführungsform des Verfahrens wird der Neigungswinkel der Messebene in einer, insbesondere zusätzlichen, Kalibrierungsmessung ermittelt. Im erfindungsgemäßen Verfahren werden während der Kalibrierungsmessung
- mittels der Laserentfernungsmessvorrichtung unter zwei unterschiedlichen, insbesondere nicht kollinearen und nicht parallelen, Entfernungsmessrichtungen - jeweils zusätzlich zu einem Entfernungsmesswert in der Messebene - auch eine Mehrzahl von Entfernungsmesswerten in zunehmendem und/oder abnehmendem (Schwenk-)Winkel zur Messebene erfasst (d.h. bei gleicher auf die Messebene projizierter Entfernungsmessrichtung - also unverändertem Entfernungsmesswinkel),
- wobei ein Minimalwert der Mehrzahl der Entfernungsmesswerte bestimmt wird, und wobei mittels des Minimalwerts und des Entfernungsmesswerts in der Messebene für die jeweilige Entfernungsmessrichtung eine (richtungsabhängige) Winkelabweichung ermittelt wird,
- wobei der Neigungswinkel der Messebene gegenüber der Referenzebene aus den beiden Winkelabweichungen und dem Winkelabstand zwischen den beiden Entfernungsmessrichtungen (Differenz der zugehörigen Entfernungsmessrichtungen) berechnet wird.

Insbesondere ist denkbar, mittels eines Eingabemittels des 2D-Laserscanners die Durchführung einer Kalibrierungsmessung zu initiieren, woraufhin eine Messfolge der Mehrzahl von Entfernungsmessungen ausgelöst wird. Während der Messfolge werden sodann die Mehrzahl von einzelnen Entfernungsmessungen "quer" zur Messebene (stets ausgehend vom Zentrum der Laserentfernungsmessvorrichtung, lediglich unter einem (Schwenk-)Winkel) durchgeführt. Aus dieser Mehrzahl an Entfernungsmessungen wird sodann zumindest ein Minimalwert in den Entfernungsmesswerten bestimmt, der genau für den Fall vorliegt, dass der Laserstrahl in der Referenzebene liegt. Auf diese Weise ist es möglich, lediglich durch Schwenken des Laserstrahls über die zu vermessende Oberfläche während der Durchführung der Kalibrierungsmessung die Winkelabweichungen der Messebene in dieser Richtung zu ermitteln.

In einer Ausführungsform des Verfahrens werden die zwei unterschiedlichen Entfernungsmessrichtungen orthogonal zueinander gewählt. Auf diese Weise kann ein mathematisch besonders einfaches, folglich wenig rechenintensives und somit schnell durchführbares Verfahren angegeben werden.

In einer Ausführungsform des Verfahrens werden die Mehrzahl der Entfernungsmesswerte in zu- und/oder abnehmendem Winkel zur Messebene während eines manuellen oder automatischen Verkippens (bzw. Schwenkens) der Laserentfernungsmessvorrichtung, insbesondere des 2D-Laserscanners, erfasst. Ein automatisches Verkippen der Laserentfernungsmessvorrichtung kann beispielsweise mittels eines speziellen (Verkipp-)Aktors realisiert werden. Der Aktor kann in Form eines Motors realisiert sein. Alternativ oder zusätzlich kann ein manuelles Verkippen mittels einer mechanischen Schwenkvorrichtung realisiert werden. Auf diese Weise kann ein Verfahren angegeben werden, dass auf konstruktiv einfache Weise realisierbar ist.

In einer Ausführungsform des Verfahrens wird der Neigungswinkel der Messebene aus dem Profilschnitt selbst ermittelt. Insbesondere ist denkbar, dass in einer Ausführungsform des Verfahrens der Neigungswinkel simulativ ermittelt wird für den Fall, dass eine Verzerrung des Profilschnitts in Folge Variation (Veränderung) des Neigungswinkels kompensiert wird. In dem Fall, dass die Verzerrung des Profilschnitts vollständig (zumindest im Rahmen von Toleranzgrenzen) verschwindet und somit kompensiert wird, entspricht der simulativ ermittelte (variierte) Winkel dem tatsächlich gesuchten Neigungswinkel der Messebene. Folglich kann auf diese Weise eine Ausgestaltung des Verfahrens angegeben werden, bei dem keine besonderen konstruktiven Vorkehrungen des 2D-Laserscanners vorgesehen werden müssen.

In einer alternativen oder zusätzlichen Ausführungsform des Verfahrens wird der Neigungswinkel durch trigonometrische Berechnung aus zwei Entfernungsmesswerten in unterschiedlichen, insbesondere nicht kollinearen oder parallelen, Entfernungsmessrichtungen sowie dem Winkelabstand zwischen diesen Entfernungsmessrichtungen ermittelt. Insbesondere kann auf diese Weise aus einem Abgleich von gemäß einem vorgegebenen oder vorgebbaren Winkelabstand (beispielsweise vorgegeben durch eine Schrittweite eines Stepper-Motors) zu erwartenden Entfernungsmesswerten mit tatsächlich erfassten Entfernungsmesswerten der Neigungswinkel der Messebene berechnet werden. Auch dieses Verfahren ist ohne besondere konstruktive Vorkehrungen des 2D-Laserscanners realisierbar.

In einer Ausführungsform des Verfahrens wird der ermittelte Neigungswinkel der Messebene unter Verwendung eines Sensors, insbesondere eines Inertialsensors wie einem Gravitationssensor oder einem Beschleunigungssensor oder einem Drehratensensor oder dergleichen, eines Inklinationssensors, einer elektrooptischen Libelle oder eines elektrolytisch arbeitenden Sensors, verfeinert oder abgeglichen. Derartige Sensoren, die dem Fachmann bekannt sind, erlauben eine einfache, insbesondere kleinbauende, Integration in den 2D-Laserscanner.

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine perspektivische Darstellung einer Ausgestaltung des erfindungsgemäßen 2D-Laserscanner,
- Figuren 2a,b: eine seitliche Ansicht der Ausgestaltung des erfindungsgemäßen 2D-Laserscanners nach Figur 1 mit einem teilweise geöffneten Gehäuse,
- Figuren 3a,b: ein typisches Messszenario, bei dem der erfindungsgemäße 2D-Laserscanner angewandt wird (a) sowie Profilschnitte (b),
- Figur 4: ein Verfahrensdiagramm eines Ausführungsbeispiels des erfindungsgemäßen Verfahrens,
- Figur 5: eine schematische Veranschaulichung eines Verfahrensschritts zum Ermitteln des Neigungswinkels.

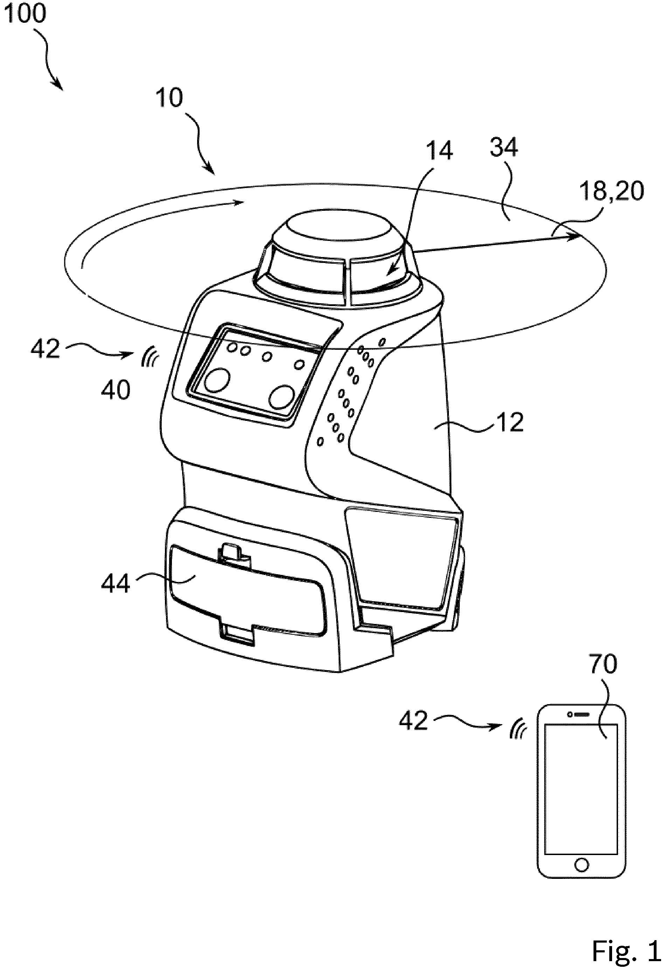

Die Darstellung der Figur 1 zeigt ein System 100 aus einem 2D-Laserscanner 10 und einer extern zum 2D-Laserscanner 10 realisierten Recheneinheit 70. Insbesondere ist eine Ausführungsform des erfindungsgemäßen 2D-Laserscanners 10 in einer perspektivischen Seitenansicht dargestellt.

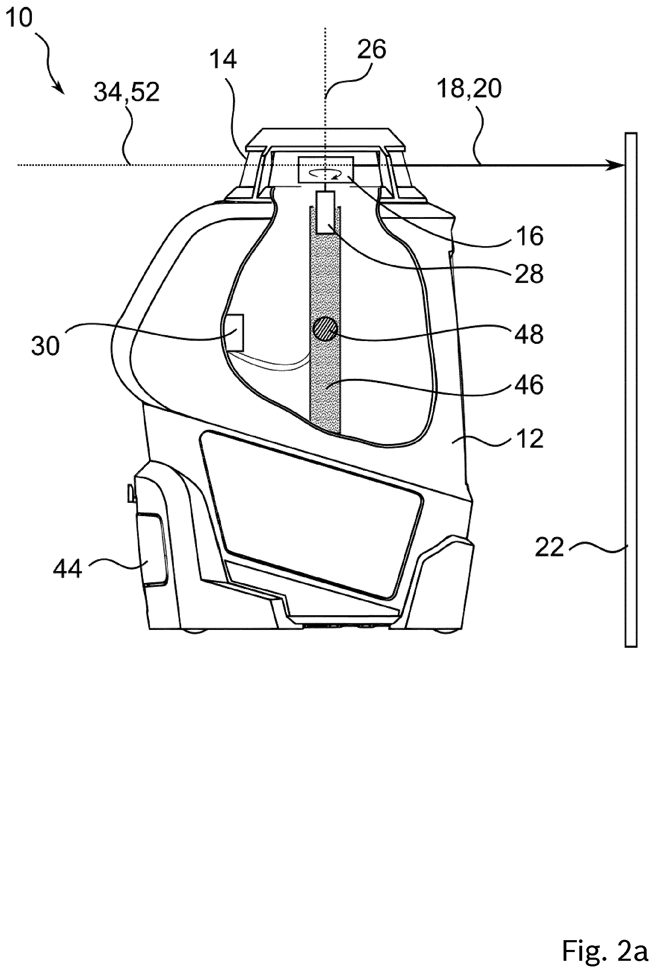

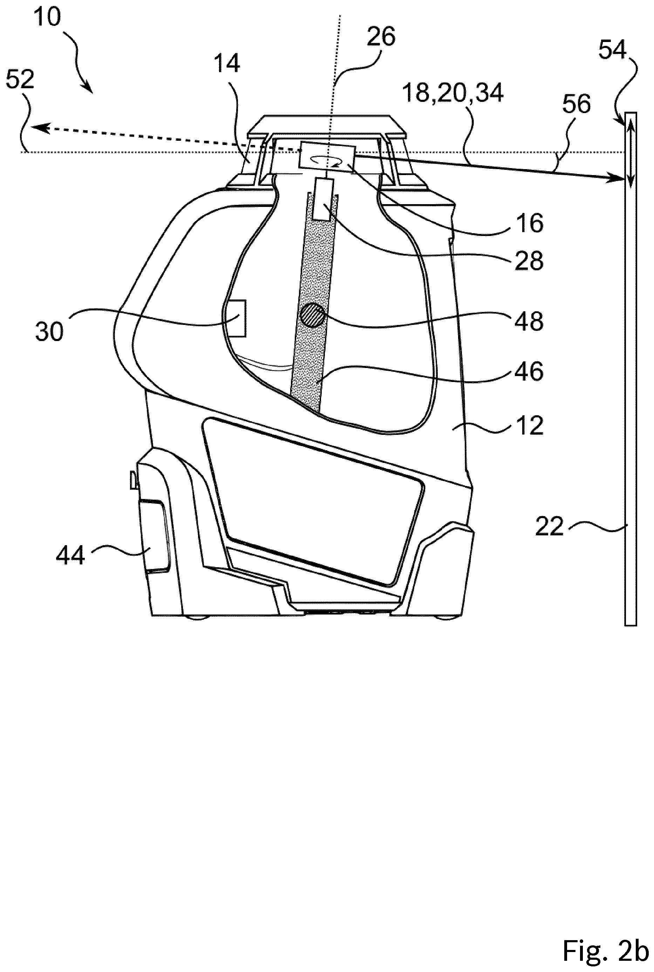

Der 2D-Laserscanner 10 weist ein Gehäuse 12 mit Kantenlängen in einem Bereich von 4 bis 15 cm auf. Das Gehäuse 12 umgibt die mechanischen Komponenten sowie die optischen und elektronischen Bestandteile (vergleiche insbesondere Figuren 2a,b) des 2D-Laserscanners 10 und schützt diese vor mechanischer Beschädigung und vermindert die Gefahr von Verunreinigungen. Auf der Oberseite des 2D-Laserscanners 10 ist eine Austrittsöffnung 14 vorgesehen, die in Form einer aus dem Gehäuse 12 herausragenden Kuppel mit transparenten Fenstern realisiert ist.

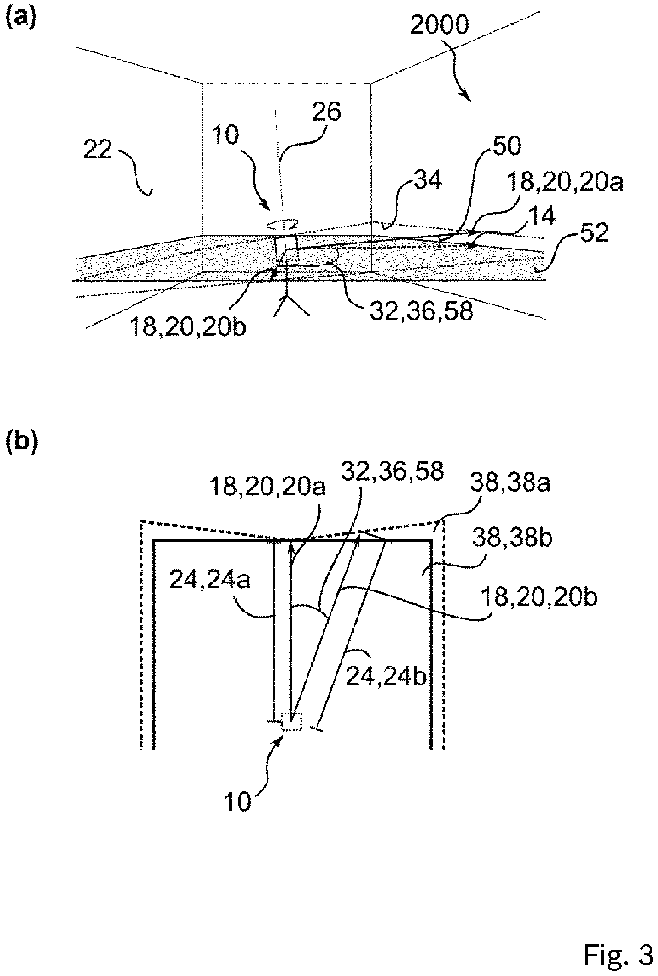

Figuren 2a und 2b zeigen die gleiche Ausführungsform des in Figur 1 dargestellten 2D-Laserscanners 10 in einer seitlichen Ansicht, bei der ein Teil des Gehäuses 12 geöffnet dargestellt ist. Der 2D-Laserscanner 10 umfasst eine Laserentfernungsmessvorrichtung 16. Die Laserentfernungsmessvorrichtung 16 umfasst eine hier nicht näher dargestellte Laserdiode zur Erzeugung eines von der Laserentfernungsmessvorrichtung 16 emittierbaren Laserstrahls 18. Der Laserstrahl 18 kann durch die Austrittsöffnung 14, insbesondere die Fenster, aus dem Gehäuse 12 austreten. Die Laserentfernungsmessvorrichtung 16 dient der Durchführung einer berührungslosen Laserentfernungsmessung in einer Entfernungsmessrichtung 20, die hier gemeinsam mit dem Laserstrahl 18 jeweils über Pfeile dargestellt wird. Die Laserentfernungsmessvorrichtung 16 umfasst ferner eine hier nicht näher dargestellte Empfangseinrichtung zur Detektion von von einem Zielobjekt 22 (in Figur 2a,b beispielsweise einer Wand) zurückgestrahlter Laserstrahlung (hier nicht näher dargestellt). Aus dem ausgesendeten Laserstrahl 18 und der von dem Zielobjekt 22 reflektierten Laserstrahlung wird mittels Phasenvergleich eine Lichtlaufzeit ermittelt und über die Lichtgeschwindigkeit der gesuchte Entfernungsmesswert 24 (vgl. Figur 3b) zwischen der Laserentfernungsmessvorrichtung 16, d.h. dem 2D-Laserscanner 10, und dem Zielobjekt 22 bestimmt. Die Laserentfernungsmessvorrichtung 16 ist um eine Rotationsachse 26, die senkrecht zur Entfernungsmessrichtung 20 der Laserentfernungsmessvorrichtung 16 ausgerichtet ist, drehbar gelagert, wobei eine aktive Drehung der Laserentfernungsmessvorrichtung 16 mittels eines Schrittmotors 28 ausgeführt werden kann. Der Schrittmotor 28 ist - in Zusammenarbeit mit einer Recheneinheit 30 des 2D-Laserscanners 10 - dazu eingerichtet, die Laserentfernungsmessvorrichtung 16 um einen vorgegebenen oder vorgebbaren Drehwinkel 32 (vgl. Figur 3b) zwischen zwei aufeinanderfolgenden Entfernungsmessungen (in Figur 3b durch die jeweiligen Pfeile dargestellt) weiterzudrehen. Der Nullpunkt (oder Referenzpunkt bzw. Startpunkt) der Entfernungsmessung liegt dabei auf der Rotationsachse 26 - und somit im Zentrum der Drehbewegung und des 2D-Laserscanners 10. Auf diese Weise kann der von dem 2D-Laserscanner 10 emittierte Laserstrahl 18 in unterschiedliche Entfernungsmessrichtungen 20 (vgl. 20a, 20b in Figur 3b) ausgerichtet werden. Dabei wird der von dem 2D-Laserscanner 10 emittierte Laserstrahl 18 in radialer Richtung (vgl. Figur 1 oder Figur 3b - die Entfernungsmessungen werden ausgehend vom 2D-Laserscanner 10 in radialer Richtung ausgeführt) eine Messebene 34 zumindest teilweise überstreichend (beispielsweise durch vorrübergehendes Ausschalten der Laserdiode unterbrochen) emittiert.

Die Entfernungsmessrichtung 20 des Laserstrahls 18 wird während der Durchführung einer jeweiligen Entfernungsmessung in Form eines Entfernungsmesswinkels 36 bezüglich der Rotationsachse 26 (vgl. Figuren 3a, b) - der hier dem Drehwinkel 32 entspricht - in der Messebene 34 erfasst. Somit ist die Entfernungsmessrichtung 20 bezogen auf den 2D-Laserscanner 10 durch den Entfernungsmesswinkel 36 definiert. Ein Nullpunkt des Entfernungsmesswinkels 36 und/oder des Drehwinkels 32 ist dabei grundsätzlich beliebig wählbar, da es nur auf relative Winkelabstände 58 ankommt (vgl. Figur 3b).

Der 2D-Laserscanner 10 ist dazu eingerichtet, ein Objekt und/oder einen Raum (vgl. Figur 3a) automatisiert zu vermessen, indem Entfernungsmesswerte 24 und zugehörige Entfernungsmessrichtungen 20 in unterschiedliche Richtungen in der Messebene 34 erfasst werden und dabei ein Profilschnitt 38 (vgl. Figur 3b) ermittelt wird.

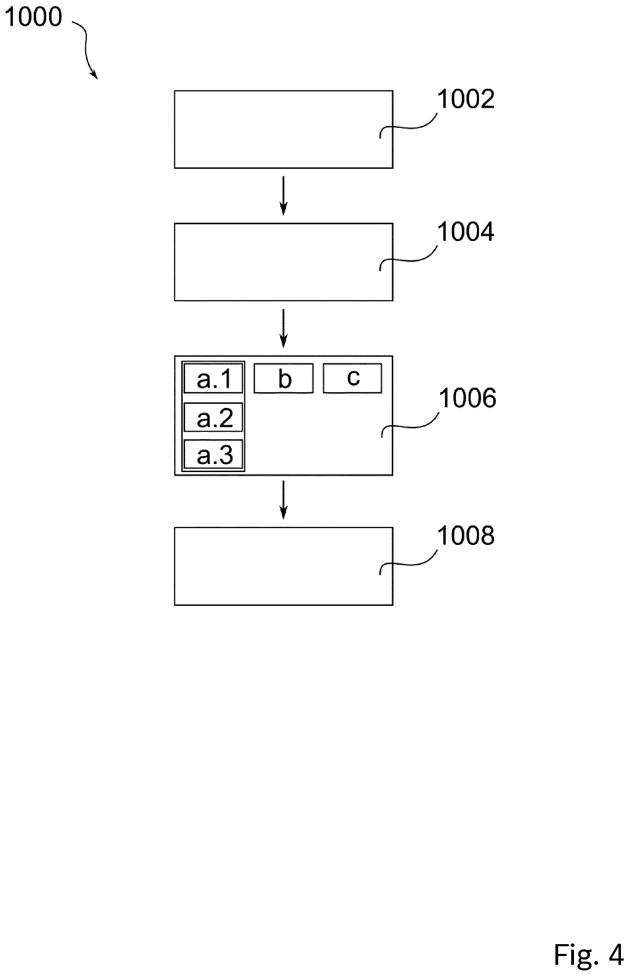

Der 2D-Laserscanner 10 weist ferner ein Bedienelement 40 auf, das zur Initiierung der Durchführung eines 2D-Laserscans dient. Ferner weist der 2D-Laserscanner 10 eine hier nicht näher dargestellte Datenkommunikationsschnittstelle auf, mittels der ein erfasster Profilschnitt 38 sowie weitere relevante Informationen an eine externe Recheneinheit 70, hier in Form eines Smart Phones, bereitgestellt werden können. Die externe Recheneinheit 70 weist dazu ebenfalls eine hier nicht näher dargestellte Datenkommunikationsschnittstelle gleichen Typs - beispielsweise eine Bluetooth-Datenkommunikationsschnittstelle - auf. Die Übertragung von Daten ist in Figur 1 mittels eines Funk-Symbols 42 dargestellt. Die externe Recheneinheit 70 weist eine hier nicht näher dargestellte Prozessorvorrichtung mit einer Speichereinheit auf, wobei auf der Speichereinheit ein Computerprogramm zumindest zur Durchführung einer Korrektur des Profilschnitts 38 vorgehalten ist. Somit ist die externe Recheneinheit 70 dazu eingerichtet, die Korrektur im Rahmen des erfindungsgemäßen Verfahrens (vgl. Verfahrensschritt 1008 in Figur 4) durchzuführen. Ferner dient die externe Recheneinheit 70 hier zur Ausgabe des Profilschnitts 38 und/oder etwaiger berechneter Größen wie beispielsweise eines Flächeninhalts an einen Nutzer. Alternativ oder zusätzlich ist denkbar, dass die Recheneinheit 30 des 2D-Laserscanners 10 selbst dazu eingerichtet ist, einen erfassten Profilschnitt 38 nach erfindungsgemäßem Verfahren zu korrigieren.

Ferner weist das Gehäuse 12 des 2D-Laserscanners 10 ein Batteriefach auf. Ein Batteriefachdeckel 44 schließt das Batteriefach bündig mit der Oberfläche des Gehäuses 12 ab. Das Batteriefach dient der Aufnahme von Batterien (hier nicht näher dargestellt) oder auch Akkumulatoren zur Energieversorgung des 2D-Laserscanners 10.

In den Figuren 2a, b sind zusätzlich zu den in Figur 1 dargestellten Merkmalen eine Halterung der Laserentfernungsmessvorrichtung 16 zu erkennen, die an ihrem oberen Ende den Schrittmotor 28 beherbergt. Ferner ist ein Aktor 48 in Form einer Schwenkvorrichtung zu erkennen, der einem Verkippen der Messebene 34 dient. Durch Verkippen bzw. Schwenken der Messebene 34 - vgl. Figuren 2a und 2b in Zusammenschau - kann ein Winkel 56 (der insbesondere auch ein Neigungswinkel 50 ist) zwischen der Messebene 34 und einer Referenzebene 52 - hier als eine in der Horizontalen verlaufende Referenzebene 52 gewählt - erreicht werden (in Figur 2 ist dieser Winkel 56 gleich Null, in Figur 2b ungleich Null), wobei sich ein Auftreffpunkt des Laserstrahls 18 auf dem Zielobjekt 22 verändert, dargestellt durch den Pfeil 54 in Figur 2b. Die durch den Pfeil 54 gekennzeichnete Richtung wird in dieser Schrift als "quer zur Messebene 34" bezeichnet.

In Figur 3a ist ein typisches Messszenario dargestellt. Dabei wird der 2D-Laserscanner 10 in der Mitte eines Raumes 2000 positioniert. Indem sukzessiv Entfernungsmesswerte 24 (vgl. Figur 3b) zu den den 2D-Laserscanner 10 umgebenden Wänden als Zielobjekten 22 in unterschiedliche Entfernungsmessrichtungen 20, 20a, 20b erfasst werden, wird ein Profilschnitt 38 (vgl. Figur 3b) des Raumes 2000 ermittelt. Der Laserstrahl 18 wird dabei jeweils von dem 2D-Laserscanner 10 in radialer Richtung emittiert, wobei die Entfernungsmessungen jeweils in der Messebene 34 liegen. Ist der 2D-Laserscanner 10 während der Durchführung des 2D-Laserscans nicht nivelliert - d.h. die Messebene 34 liegt nicht parallel zur horizontalen Referenzebene 52 (hier schraffiert dargestellt), sondern weist einen Neigungswinkel 50 zu dieser auf -, so entsteht ein verzerrter Profilschnitt 38, 38a, beispielsweise wie er in Figur 3b dargestellt ist. Der verzerrte Profilschnitt 38, 38a kann unter Ausführung des erfindungsgemäßen Verfahrens 1000 (vgl. Figur 4) zu einem unverzerrten Profilschnitt 38, 38b korrigiert werden, vgl. Figur 3b.

Figur 4 zeigt ein Ausführungsbeispiel des erfindungsgemäßen Verfahrens zum Ermitteln und insbesondere Korrigieren eines Profilschnitts 38 eines Objektes - hier des Raumes 2000. Der Profilschnitt 38 wird zunächst in den Verfahrensschritten 1002 und 1004 mittels des 2D-Laserscanners 10 erfasst, indem in Verfahrensschritt 1002 einander zugeordnete Entfernungsmesswerte 24 und Entfernungsmessrichtungen 20 mittels der Laserentfernungsmessvorrichtung 16 in der von dem Laserstrahl 18 zumindest teilweise radial überstrichenen Messebene 34 erfasst werden und in Verfahrensschritt 1004 aus diesen Entfernungsmesswerten 24 und zugeordneten Entfernungsmessrichtungen 20 der Profilschnitt 38 (z.B. der Profilschnitt 38a wie er in Figur 3b gezeigt ist) in Form einer gefilterten und geglätteten Punktwolke ermittelt. Dabei können die einzelnen Punkte der Punktwolke auch durch Linien verbunden sein, sodass die Darstellung der Figur 3b - Profilschnitt 38a - erhalten wird.

In Verfahrensschritt 1006 wird sodann der Neigungswinkel 50 der Messebene 34 gegenüber der Referenzebene 52, hier der horizontalen Referenzebene 52, ermittelt. Dies kann auf unterschiedliche Weise erfolgen.

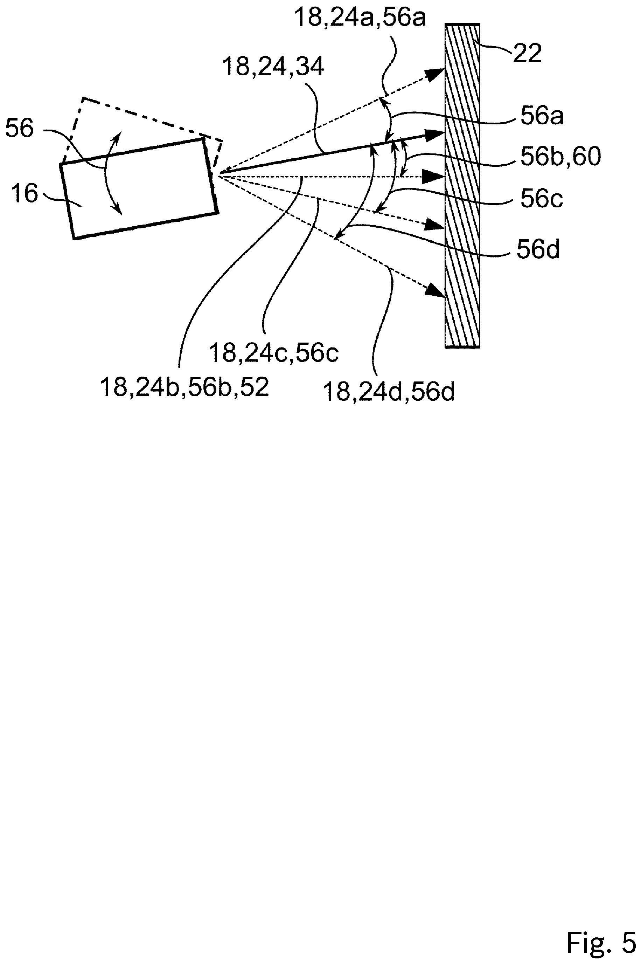

In einem ersten Ausführungsbeispiel des Verfahrensschritts 1006 - hier bezeichnet mit (a) - wird der Neigungswinkel 50 der Messebene 34 in einer separaten Kalibrierungsmessung ermittelt. Dabei werden in Unterverfahrensschritten
- 1006a.1:
   mittels der Laserentfernungsmessvorrichtung 16 unter zwei zueinander orthogonal stehenden Entfernungsmessrichtungen 20, 20a, 20b (vgl. Figur 3a) - jeweils zusätzlich zu dem Entfernungsmesswert 24 in der Messebene - auch eine Mehrzahl von Entfernungsmesswerten 24a, 24b, 24c, 24d in zunehmendem und/oder abnehmendem Winkel 56 (vgl. Figur 5 und auch Figur 2b) zur Messebene 34 erfasst,
- 1006a.2:
   ein Minimalwert (hier Entfernungsmesswert 24b) der Mehrzahl der Entfernungsmesswerte 24 bestimmt und mittels des Minimalwerts und des Entfernungsmesswerts 24 in der Messebene 34 für die jeweilige Entfernungsmessrichtung 20, 20a, 20b eine (richtungsabhängige) Winkelabweichung ermittelt,
- 1006a.3:
   der Neigungswinkel 50 der Messebene 34 gegenüber der Referenzebene 52 aus den beiden Winkelabweichungen und dem Winkelabstand 58 zwischen den beiden Entfernungsmessrichtungen 20, 20a, 20b berechnet.

Der Verfahrensschritt 1006a.1 wird dabei unter Verwendung des in Figur 2 dargestellten Aktors 48 realisiert.

In Figur 5 ist das Messprinzip für eine Entfernungsmessrichtung 20 schematisch dargestellt. Dabei werden jeweils zusätzlich zu dem Entfernungsmesswert 24 in der Messebene 34 (durchgezogener Pfeil) eine Mehrzahl von Entfernungsmesswerten 24a, 24b, 24c, 24d (gestrichelte Pfeile) in zunehmendem und abnehmendem Winkel 56a, 56b, 56c, 56d zur Messebene 34 erfasst. Aus dem kleinsten Entfernungsmesswert 24b und dem Entfernungsmesswert 24 in der Messebene 34 wird mittels trigonometrischer Funktion die Winkelabweichung 60 in dieser Richtung (z.B. Entfernungsmessrichtung 20a9) ermittelt.

In einem zweiten Ausführungsbeispiel des Verfahrensschritts 1006 - hier bezeichnet mit (b) - wird der Neigungswinkel 50 der Messebene 34 aus dem Profilschnitt 38, 38a selbst ermittelt, wobei der Neigungswinkel 50 simulativ ermittelt wird für den Fall, dass eine Verzerrung des Profilschnitts 38, 38a in Folge Variation des Neigungswinkels 50 kompensiert wird, sodass der gewünschte (d.h. gemäß typischer Wandverläufe erwartete, geradlinige bzw. knickfreie) Profilschnitt 38, 38b erhalten wird.

In einem dritten Ausführungsbeispiel des Verfahrensschritts 1006 - hier bezeichnet mit (c) - wird der Neigungswinkel 50 der Messebene 34 aus dem Profilschnitt 38, 38a selbst durch trigonometrische Berechnung aus zwei unterschiedlichen, nicht kollinearen oder parallelen Entfernungsmessrichtungen 20, 20a, 20b sowie dem Winkelabstand 58 zwischen diesen Entfernungsmessrichtungen 20, 20a, 20b ermittelt.

Abschließend wird in Verfahrensschritt 1008 der verzerrte Profilschnitt 38, 38a unter Verwendung des ermittelten Neigungswinkels 50 der Messebene 34 korrigiert, indem die erfassten Entfernungsmesswerte 20, 20a, 20b mittels trigonometrischer Funktionen und unter Verwendung des Neigungswinkels 50 umgerechnet werden, wobei die Entfernungsmesswerte 20, 20a, 20b auf diese Weise in die Referenzebene 52 projiziert werden.

## Patentansprüche

1. Verfahren zum Ermitteln eines Profilschnitts eines Objektes und/oder Raumes mittels eines 2D-Laserscanners mit einer Laserentfernungsmessvorrichtung, umfassend die Verfahrensschritte:
• Erfassen von einander zuordenbaren Entfernungsmesswerten und Entfernungsmessrichtungen mittels der Laserentfernungsmessvorrichtung in einer von einem Laserstrahl der Laserentfernungsmessvorrichtung radial überstrichenen Messebene,
• Ermitteln des Profilschnitts aus den Entfernungsmesswerten und Entfernungsmessrichtungen,
• Ermitteln eines Neigungswinkels der Messebene gegenüber einer Referenzebene, insbesondere einer horizontalen oder einer vertikalen Referenzebene,
• Korrigieren des Profilschnitts unter Verwendung des Neigungswinkels der Messebene,
wobei der Neigungswinkel der Messebene unter Verwendung der Laserentfernungsmessvorrichtung und in einer Kalibriermessung ermittelt wird,
**dadurch gekennzeichnet, dass** in der Kalibrierungsmessung
• mittels der Laserentfernungsmessvorrichtung in zwei unterschiedlichen und nicht parallelen Entfernungsmessrichtungen jeweils zusätzlich zu einem Entfernungsmesswert in der Messebene auch eine Mehrzahl von Entfernungsmesswerten in zunehmendem und/oder abnehmendem Winkel zur Messebene erfasst werden,
• wobei ein Minimalwert der Entfernungsmesswerte bestimmt wird, und
• wobei mittels des Minimalwerts und des Entfernungsmesswerts in der Messebene für die jeweilige Entfernungsmessrichtung eine richtungsabhängige Winkelabweichung ermittelt wird,
• wobei der Neigungswinkel der Messebene gegenüber der Referenzebene aus den beiden richtungsabhängigen Winkelabweichungen und dem Winkelabstand zwischen den beiden Entfernungsmessrichtungen berechnet wird.

2. Verfahren nach Anspruch 1, **dadurch gekennzeichnet, dass** die zwei unterschiedlichen Entfernungsmessrichtungen orthogonal zueinander gewählt werden.

3. Verfahren nach einem der Ansprüche 1 oder 2, **dadurch gekennzeichnet, dass** die Mehrzahl der Entfernungsmesswerte in zunehmendem und/oder abnehmendem Winkel zur Messebene während eines manuellen oder automatischen Verkippens der Laserentfernungsmessvorrichtung, insbesondere des 2D-Laserscanners, erfasst werden.

4. Verfahren nach einem der vorhergehenden Ansprüche, **dadurch gekennzeichnet, dass** der Neigungswinkel der Messebene aus dem Profilschnitt ermittelt wird.

5. Verfahren nach Anspruch 4, **dadurch gekennzeichnet, dass** der Neigungswinkel simulativ ermittelt wird für den Fall, dass eine Verzerrung des Profilschnitts bei Variation des Neigungswinkels kompensiert wird.

6. Verfahren nach Anspruch 4, **dadurch gekennzeichnet, dass** der Neigungswinkel durch trigonometrische Berechnung aus zwei Entfernungsmesswerten in unterschiedlichen und nicht parallelen Entfernungsmessrichtungen sowie dem Winkelabstand zwischen diesen Entfernungsmessrichtungen ermittelt wird.

7. Verfahren nach einem der vorhergehenden Ansprüche, **dadurch gekennzeichnet, dass** der ermittelte Neigungswinkel der Messebene unter Verwendung eines Sensors verfeinert oder abgeglichen wird.

8. 2D-Laserscanner umfassend zumindest eine Laserentfernungsmessvorrichtung, wobei der 2D-Laserscanner dazu eingerichtet ist, einander zuordenbare Entfernungsmesswerte und Entfernungsmessrichtungen mittels der Laserentfernungsmessvorrichtung in einer von einem Laserstrahl der Laserentfernungsmessvorrichtung radial überstrichenen Messebene zu erfassen, **gekennzeichnet durch** eine Recheneinheit, die dazu eingerichtet ist, ein Verfahren nach einem der Ansprüche 1 bis 7 auszuführen.

9. System umfassend einen 2D-Laserscanner, der 2D-Laserscanner umfassend zumindest eine Laserentfernungsmessvorrichtung, wobei der 2D-Laserscanner dazu eingerichtet ist, einander zuordenbare Entfernungsmesswerte und Entfernungsmessrichtungen mittels der Laserentfernungsmessvorrichtung in einer von einem Laserstrahl der Laserentfernungsmessvorrichtung radial überstrichenen Messebene zu erfassen, sowie eine Recheneinheit, die dazu eingerichtet ist, ein Verfahren nach einem der Ansprüche 1 bis 7 auszuführen.

## Claims

1. Method for ascertaining a profile section of an object and/or space by means of a 2D laser scanner having a laser distance measuring device, comprising the method steps of:
• acquiring mutually assignable distance measurement values and distance measurement directions by means of the laser distance measuring device in a measurement plane radially swept-over by a laser beam of the laser distance measuring device,
• ascertaining the profile section from the distance measurement values and distance measurement directions,
• ascertaining a tilt angle of the measurement plane relative to a reference plane, in particular a horizontal or a vertical reference plane,
• correcting the profile section using the tilt angle of the measurement plane,
wherein the tilt angle of the measurement plane is ascertained in a calibration measurement using the laser distance measuring device,
**characterized in that** during the calibration measurement
• a plurality of distance measurement values with increasing and/or decreasing angles with respect to the measurement plane are also acquired in two different and non-parallel distance measurement directions, in each case in addition to a distance measurement value in the measurement plane, by means of the laser distance measuring device,
• wherein a minimum value of the distance measurement values is determined, and
• wherein a direction-dependent angular deviation is ascertained for the respective distance measurement direction by means of the minimum value and the distance measurement value in the measurement plane,
• wherein the tilt angle of the measurement plane vis-à-vis the reference plane is calculated from the two direction-dependent angular deviations and the angular distance between the two distance measurement directions.

2. Method according to Claim 1, **characterized in that** the two different distance measurement directions are chosen orthogonally to one another.

3. Method according to either of Claims 1 and 2, **characterized in that** the plurality of the distance measurement values are acquired with increasing and/or decreasing angles with respect to the measurement plane during manual or automatic tilting of the laser distance measuring device, in particular of the 2D laser scanner.

4. Method according to any of the preceding claims, **characterized in that** the tilt angle of the measurement plane is ascertained from the profile section.

5. Method according to Claim 4, **characterized in that** the tilt angle is ascertained by simulation for the case that a distortion of the profile section is compensated for by varying the tilt angle.

6. Method according to Claim 4, **characterized in that** the tilt angle is ascertained by trigonometric calculation from two distance measurement values in different and non-parallel distance measurement directions and also the angular distance between these distance measurement directions.

7. Method according to any of the preceding claims, **characterized in that** the ascertained tilt angle of the measurement plane is refined or calibrated using a sensor.

8. 2D laser scanner comprising at least one laser distance measuring device, wherein the 2D laser scanner is configured to acquire mutually assignable distance measurement values and distance measurement directions by means of the laser distance measuring device in a measurement plane radially swept-over by a laser beam of the laser distance measuring device, **characterized by** a computing unit which is configured to carry out a method according to any of Claims 1 to 7.

9. System comprising a 2D laser scanner, 2D laser scanner comprising at least one laser distance measuring device, wherein the 2D laser scanner is configured to acquire mutually assignable distance measurement values and distance measurement directions by means of the laser distance measuring device in a measurement plane radially swept-over by a laser beam of the laser distance measuring device, and a computing unit which is configured to carry out a method according to any of Claims 1 to 7.

## Revendications

1. Procédé de détermination d'une section de profil d'un objet et/ou d'un espace au moyen d'un scanner laser 2D comportant un télémètre laser, comprenant les étapes de procédé suivantes :
• l'acquisition, au moyen du télémètre laser, de valeurs de mesure de distance et de directions de mesure de distance pouvant être associées les unes aux autres, dans un plan de mesure balayé radialement par un faisceau laser du télémètre laser,
• la détermination de la section de profil à partir des valeurs de mesure de distance et des directions de mesure de distance,
• la détermination d'un angle d'inclinaison du plan de mesure par rapport à un plan de référence, en particulier un plan de référence horizontal ou vertical,
• la correction de la section de profil en utilisant l'angle d'inclinaison du plan de mesure,
l'angle d'inclinaison du plan de mesure étant déterminé en utilisant le télémètre laser et lors d'une mesure d'étalonnage,
**caractérisé en ce que**, lors de la mesure d'étalonnage
• au moyen du télémètre laser, dans deux directions de mesure de distance différentes et non parallèles, respectivement en plus d'une valeur de mesure de distance dans le plan de mesure, une pluralité de valeurs de mesure de distance sont également acquises selon un angle croissant et/ou décroissant par rapport au plan de mesure,
• une valeur minimale des valeurs de mesure de distance étant déterminée, et
• un écart angulaire dépendant de la direction étant déterminé pour la direction de mesure de distance respective au moyen de la valeur minimale et de la valeur de mesure de distance dans le plan de mesure,
• l'angle d'inclinaison du plan de mesure par rapport au plan de référence étant calculé à partir des deux écarts angulaires dépendant de la direction et de la distance angulaire entre les deux directions de mesure de distance.

2. Procédé selon la revendication 1, **caractérisé en ce que** les deux directions de mesure de distance différentes sont choisies orthogonales l'une par rapport à l'autre.

3. Procédé selon l'une des revendications 1 ou 2, **caractérisé en ce que** la pluralité de valeurs de mesure de distance sont acquises selon un angle croissant et/ou décroissant par rapport au plan de mesure lors d'un basculement manuel ou automatique du télémètre laser, en particulier du scanner laser 2 D.

4. Procédé selon l'une des revendications précédentes, **caractérisé en ce que** l'angle d'inclinaison du plan de mesure est déterminé à partir de la section de profil.

5. Procédé selon la revendication 4, **caractérisé en ce que** l'angle d'inclinaison est déterminé par simulation dans le cas où une déformation de la section de profil est compensée lors d'une variation de l'angle d'inclinaison.

6. Procédé selon la revendication 4, **caractérisé en ce que** l'angle d'inclinaison est déterminé par calcul trigonométrique à partir de deux valeurs de mesure de distance dans des directions de mesure de distance différentes et non parallèles ainsi que de la distance angulaire entre ces directions de mesure de distance.

7. Procédé selon l'une des revendications précédentes, **caractérisé en ce que** l'angle d'inclinaison déterminé du plan de mesure est affiné ou ajusté en utilisant un capteur.

8. Scanner laser 2D comprenant au moins un télémètre laser, le scanner laser 2D étant configuré pour l'acquisition de valeurs de mesure de distance et de directions de mesure de distance pouvant être associées les unes aux autres au moyen du télémètre laser dans un plan de mesure balayé radialement par un faisceau laser du télémètre laser, **caractérisé par** une unité de calcul conçue pour mettre en œuvre un procédé selon l'une des revendications 1 à 7.

9. Système comprenant un scanner laser 2D, le scanner laser 2D comprenant au moins un télémètre laser, le scanner laser 2D étant conçu pour l'acquisition, au moyen du télémètre laser, de valeurs de mesure de distance et de directions de mesure de distance pouvant être associées les unes aux autres, dans un plan de mesure balayé radialement par un faisceau laser du télémètre laser, ainsi qu'une unité de calcul conçue pour mettre en œuvre un procédé selon l'une des revendications 1 à 7.
